# EUROPEAN PATENT APPLICATION

(11) **EP 4 783 723 A1**
(43) Date of publication of application: **29.07.2026**
(21) Application number: 24882827.9
(22) Date of filing: 23.10.2024
(51) Int. Cl.: H04W 76/14, H04W 8/00, H04L 7/027, H04W 84/12

(54) **DEVICE FOR CONNECTION WITH EXTERNAL DEVICE, AND OPERATING METHOD THEREOF**

(30) Priority: 27.10.2023 KR 20230145365
(71) Applicant: Samsung Electronics Co., Ltd., Suwon-si, Gyeonggi-do 16677 (KR)
(72) Inventor: MUN, Kyeryeon, Suwon-si Gyeonggi-do 16677 (KR)
(74) Representative: Walaski, Jan Filip
(86) International application number: PCT/KR2024/016210
(87) International publication number: WO 2025/089800

(57) **Abstract**

An electronic device according to one embodiment of the present disclosure comprises a memory, a communication unit and a processor connected to the memory and the communication unit, wherein the processor receives a connection packet from an external electronic device through the communication unit, identifies connection management data of the external electronic device, and responds to the identification that the connection management data of the external electronic device includes a predetermined value, so as to increase the connection priority of the external electronic device, the connection management data of the external electronic device has a predetermined number of bits, and the bits of the connection management data can be determined on the basis of whether a connection packet is received from the external electronic device at a plurality of time intervals.

## Description

### [Technical Field]

Embodiments disclosed in this document relate to an electronic device for connection to an external device and a method of operating the electronic device.

### [Background Art]

With the development of Internet of Things (IoT) technology, IoT devices (e.g., smart TV, wireless image transmission/reception device, game console, etc.) may be connected to each other and controlled by a remote control device (e.g., a smartphone or a remote controller). The IoT devices may be connected wiredly or may be interconnected using short-range wireless communication technology such as Wi-Fi or Bluetooth. As technology related to wireless connection between IoT devices has developed, the number of other devices connectable to one device has increased, and accordingly, technology for an electronic device to search for a target device to be connected and to determine a priority for connectable devices may be provided.

### [Disclosure of Invention]

### [Technical Problem]

In order to connect an electronic device (e.g., a TV) and an external electronic device (e.g., a sound output device), the electronic device may search for external electronic devices located adjacent to the electronic device, select an external electronic device to be connected, and perform a series of procedures. In order for the electronic device to identify a connectable external electronic device, a distance between devices, a signal strength, a connection history, or the like may be used, but the electronic device has to operate according to each standardized specification, and a user input for connection may be required.

Based on the discussion as described above, the disclosure provides an apparatus and method for supporting device connection using a separate own packet configuration that is not dependent on a protocol.

### [Solution to Problems]

An electronic device according to an embodiment of the disclosure includes a memory including at least one storage medium storing instructions, a communication unit including a communication circuitry, and a processor connected to the memory and the communication unit and including a processing circuitry, and the processor is configured to receive an access packet from an external electronic device through the communication unit, identify connection management data of the external electronic device, and increase a connection priority of the external electronic device in response to identifying that connection management data of the external electronic device includes a predetermined value, the connection management data of the external electronic device is composed of a predetermined number of bits, and bits of the connection management data may be determined based on whether the access packet is received from the external electronic device in a plurality of time intervals.

In an embodiment, the access packet may include a probe request frame, and the probe request frame may include an identifier of a network to which the external electronic device is connected.

In an embodiment, values corresponding to the plurality of time intervals may have a value of 0 or 1, a time interval in which an access packet is received from the external electronic device may have a value of 1, and a time interval in which an access packet is not received from the external electronic device may have a value of 0.

In an embodiment, the processor may increase a connection priority of the external electronic device in case that the connection management data includes a first value, and transmit a connection request to the external electronic device in case that the connection management data includes a second value.

In an embodiment, the processor may transmit a connection request to the external electronic device in response to identifying that a priority of the external electronic device is equal to or greater than a threshold.

In an embodiment, the processor may transmit a connection request to the external electronic device in response to identifying that a network to which the external electronic device and the electronic device are connected is identical.

In an embodiment, the processor may display a user interface for connection between the external electronic device and the electronic device in case that a connection priority of the external electronic device is equal to or greater than a threshold.

In an embodiment, the electronic device is configured to generate pattern information of the external electronic device based on the connection management data and determine whether the pattern information includes the predetermined value, the connection management data may have a binary form, and the pattern information may have a hexadecimal form.

In an embodiment, the processor may delete the connection management data from the memory in case that a predetermined time elapses after the access packet is received.

In an embodiment, the processor may synchronize a clock value of the electronic device for communication between the electronic device and the external electronic device based on a clock value of the external electronic device, the probe request frame including the clock value of the external electronic device.

A method of operating an electronic device according to an embodiment of the disclosure includes receiving an access packet from an external electronic device, identifying connection management data of the external electronic device, and increasing a connection priority of the external electronic device in response to identifying that probe storage data of the external electronic device includes a predetermined value, data regarding a connection pattern of the external electronic device includes a predetermined number of bits, and bits of the connection management data may be determined based on whether the access packet is received from the external electronic device in a plurality of time intervals.

In an embodiment, the access packet may include a probe request frame, and the probe request frame may include an identifier of a network to which the external electronic device is connected.

In an embodiment, values corresponding to the plurality of time intervals may have a value of 0 or 1, a time interval in which an access packet is received from the external electronic device may have a value of 1, and a time interval in which an access packet is not received from the external electronic device may have a value of 0.

In an embodiment, the method of operating the electronic device may include increasing a connection priority of the external electronic device in case that the connection management data includes a first value, and transmitting a connection request to the external electronic device in case that the connection management data includes a second value.

In an embodiment, the method of operating the electronic device may include transmitting a connection request to the external electronic device in response to identifying that a priority of the external electronic device is equal to or greater than a threshold.

In an embodiment, the method of operating the electronic device may include transmitting a probe response frame to the external electronic device in response to identifying that a network to which the external electronic device and the electronic device are connected is identical.

In an embodiment, the method of operating the electronic device may include displaying a user interface for connection between the external electronic device and the electronic device in case that a connection priority of the external electronic device is equal to or greater than a threshold.

A method of operating an electronic device according to an embodiment includes generating pattern information of the external electronic device based on the connection management data and determining whether the pattern information includes the predetermined value, and the connection management data may have a binary form, and the pattern information may have a hexadecimal form.

In an embodiment, the method of operating the electronic device may include deleting the connection management data from the memory in case that a predetermined time elapses after the access packet is received.

In an embodiment, the probe request frame may synchronize a clock value of the electronic device for communication between the electronic device and the external electronic device based on a clock value of the external electronic device.

### [Advantageous Effects]

Embodiments of the disclosure provide an effect of enabling easy connection by utilizing a probe request frame for connection between an electronic device and an external electronic device.

Further, an effect of enabling efficient connection between an electronic device and an external electronic device is provided by managing a connection priority of the external electronic device based on connection management data regarding an access packet transmitted by the external electronic device.

Effects obtainable from the disclosure are not limited to the effects mentioned in various embodiments, and other effects not mentioned is clearly understood by those having ordinary skill in the technical field to which the disclosure belongs from the description below.

### [Brief Description of Drawings]

FIG. 1 is a block diagram illustrating a configuration of an electronic device according to an embodiment;
FIG. 2 is a block diagram illustrating a detailed configuration of an electronic device according to an embodiment.
FIG. 3 illustrates an example of connection management data according to an embodiment.
FIG. 4 illustrates an operation flow of an electronic device according to an embodiment.
FIG. 5 illustrates an operation flow of an external electronic device according to an embodiment.
FIG. 6 illustrates a signaling flow of an electronic device and an external electronic device according to an embodiment.

In connection to the description of the drawings, identical or similar reference numerals may be used for identical or similar components.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

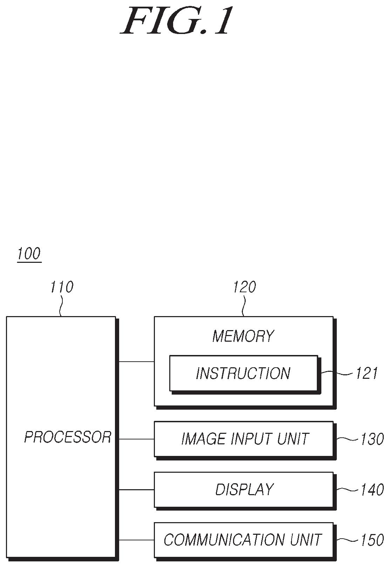

FIG. 1 illustrates a block configuration of an electronic device according to an embodiment. The electronic device 100 may be a wearable terminal, such as watches and glasses, capable of performing various computing functions, such as video watching and communication. The electronic device 100 may be various types of terminals without being limited to the above examples.

According to an embodiment, the memory 120 is a storage medium used by the electronic device 100 and may store data, such as at least one command 121 or configuration information corresponding to at least one program. The program may include an operating system (OS) program and various application programs.

In an embodiment, the memory 120 may store pairing information about an external electronic device located adjacent to the electronic device 100. In an embodiment, the pairing information may include, e.g., device information about the external electronic device, information about another external electronic device or remote control device paired with the external electronic device, information about a scheme (e.g., Bluetooth or Wi-Fi) in which the external electronic device and the other external electronic device or remote control device are paired with each other, and information about a pairing history between the external electronic device and the other external electronic device or remote control device.

In an embodiment, the memory 120 may include at least one type of storage medium of flash memory types, hard disk types, multimedia card micro types, card types of memories (e.g., SD or XD memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

According to an embodiment, the image input unit 130 may receive images and image information through a tuner (not shown), an input/output unit (not shown), or the communication unit 150. The image input unit 130 may include at least one of the tuner and the input/output unit. The tuner may tune and select only the frequency of the broadcast channel to be received by the electronic device 100 from among many radio wave components through amplification, mixing, resonance, or the like for the broadcast signal wiredly/wirelessly received. The broadcast signal may include video, audio, and additional data (e.g., electronic program guide (EPG)). The tuner may receive real-time broadcast channels (or real-time viewing images) from various broadcast sources, such as terrestrial broadcasts, cable broadcasts, satellite broadcasts, Internet broadcasts, and the like. The tuner may be implemented integrally with the electronic device 100 or may be implemented as a separate tuner electrically connected to the electronic device 100. The input/output unit may include at least one of a high definition multimedia interface (HDMI) input port, a component input jack, a PC input port, and a USB input jack capable of receiving an image and image information from an external device of the electronic device 100 under the control of the processor 110. It is obvious to one of ordinary skill in the art that the input/output unit may be added, deleted, and/or changed according to the performance and structure of the electronic device 100.

According to an embodiment, the display 140 may perform functions for outputting information in the form of numbers, characters, images, and/or graphics. The display 140 may include at least one hardware module for output. The at least one hardware module may include at least one of, e.g., a liquid crystal display (LCD), a light emitting diode (LED), a light emitting polymer display (LPD), an organic light emitting diode (OLED), an active matrix organic light emitting diode (AMOLED), or flexible LED (FLED). The display 140 may display a screen corresponding to data received from the processor 110. The display 140 may be referred to as an 'output unit', a 'display unit', or by other terms having an equivalent technical meaning. "Screen" may include an image displayed on the display of the electronic device. "Image" may be referred to as a frame. Various types of objects, such as icons, text, photos, videos, widgets, etc. may be displayed on the screen.

According to an embodiment, the communication unit 150 may provide a wired/wireless communication interface that enables communication with an external device. The communication unit 150 may include at least one of a wired Ethernet, a wireless LAN communication unit, and a short-range communication unit. The wireless LAN communication unit may include, e.g., Wi-Fi, and may support the wireless LAN standard (IEEE802.11x) of the institute of electrical and electronics engineers (IEEE). The wireless LAN communication unit may be wirelessly connected to an access point (AP) under the control of the processor 110. An AP may include a device for connecting devices by related standards using Wi-Fi in a computer network. The short-range communication unit may perform short-range communication wirelessly with an external device under the control of the processor 110. Short-range communication may include Bluetooth, Bluetooth low energy, infrared data association (IrDA), ultra wideband (UWB), and near-field communication (NFC). The external device may include a server device and a mobile terminal (e.g., phone, tablet, etc.) providing, e.g., a video service.

According to an embodiment, the processor 110 may control at least one other component of the electronic device 100 and/or execute computation or data processing regarding communication by executing at least one command 121 stored in the memory 120. The processor 110 may include at least one of a central processing unit (CPU), a graphic processing unit (GPU), a micro controller unit (MCU), a sensor hub, a supplementary processor, a communication processor, an application processor, an application specific integrated circuit (ASIC), or field programmable gate arrays (FPGA) and may have multiple cores.

In an embodiment, the processor 110 may execute, e.g., software to control at least one other component (e.g., a hardware or software component) of the electronic device 100 connected with the processor 110 and may process or compute various data. According to an embodiment, as at least part of the data processing or computation, the processor 110 may store a command or data received from another component onto a volatile memory, process the command or the data stored in the volatile memory, and store resulting data in a non-volatile memory. According to an embodiment, the processor 110 may include a main processor (e.g., a central processing unit (CPU) or an application processor (AP)), or an auxiliary processor (e.g., a graphics processing unit (GPU), a neural processing unit (NPU), an image signal processor (ISP), a sensor hub processor, or a communication processor (CP)) that is operable independently from, or in conjunction with, the main processor. For example, in case that the electronic device 100 includes the main processor and the auxiliary processor, the auxiliary processor may be configured to use lower power than the main processor or to be specified for a designated function. The auxiliary processor may be implemented separately from, or as part of, the main processor.

In an embodiment, the processor 110 may obtain image frame data from at least one of the memory 120, the image input unit 130, or the communication unit 150. The processor 110 may receive image frame data from at least one of the memory 120, the image input unit 130, or the communication unit 150. The image frame data may include data regarding a frame constituting an image. For example, the image frame data may be identified from the memory 120 (e.g., an image recorded and stored). For example, the image frame data may include data obtained from the communication unit 150 or the image input unit 130 (e.g., real-time streaming image).

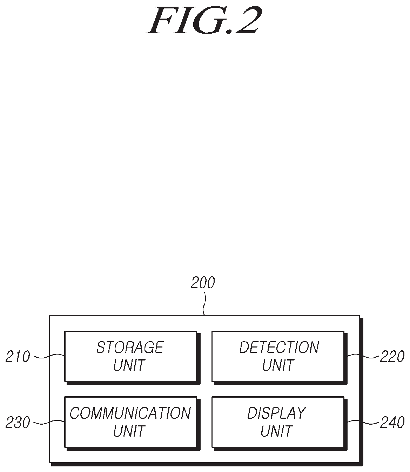

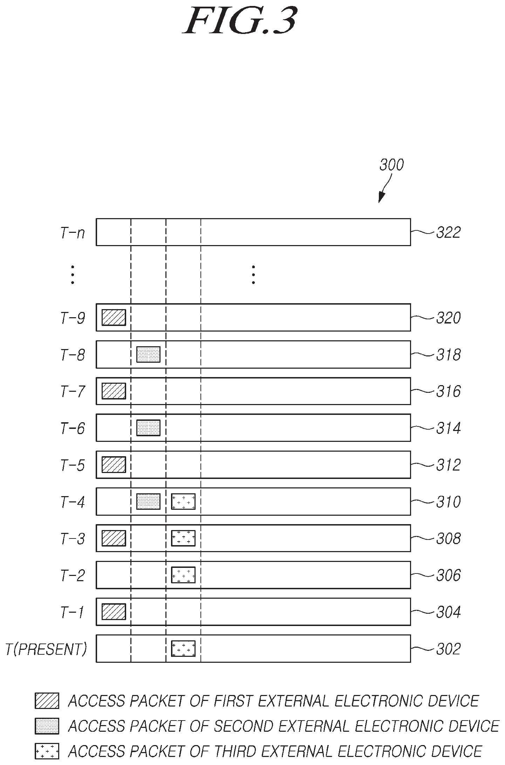

FIG. 2 is a block diagram illustrating a detailed configuration of an electronic device according to an embodiment. FIG. 3 illustrates an example of connection management data according to an embodiment. An electronic device 200 of FIGS. 2 and 3 may be a device corresponding to the electronic device 100 of FIG. 1.

According to an embodiment, an external electronic device may transmit an access packet (e.g., a probe request frame) to an electronic device.

In an embodiment, the external electronic device may include a device disposed adjacent to the electronic device and capable of communicating data with the electronic device. For example, the external electronic device may include a device (e.g., a speaker) for outputting information transmitted by the electronic device. For example, in case that the electronic device is a PC, the external electronic device may include a device such as a monitor, a keyboard, a mouse, or a printer. For example, in case that the electronic device is a smartphone, the external electronic device may include a TV. For example, in case that the electronic device is a TV, the external electronic device may include a smartphone.

In an embodiment, the electronic device and the external electronic device may transmit/receive a probe request and a probe response. Taking the Institute of Electrical and Electronic Engineers (IEEE) standard as an example, the probe request and response frame mutually transmitted and received between the external electronic device and the electronic device may be used for discovery of the electronic device and the external electronic device (e.g., packet discovery). After the external electronic device and the electronic device complete a mutual discovery procedure through the probe request and response, the electronic device and the external electronic device may perform a process for connection (e.g., a connection request, a connection response, authentication, etc.), and after the process is completed, may communicate data with each other. Embodiments of the disclosure relate to a method for an electronic device to identify connection management data based on a reception aspect of a probe request frame and manage connection to an external electronic device based thereon, without defining a separate signal different from a protocol for connection between the electronic device and the external electronic device, and using the probe request frame that was previously used for discovery of the electronic device and the external electronic device as is.

According to an embodiment, an electronic device 200 may include a storage unit 210, a detection unit 220, a communication unit 230, and a display unit 240.

In an embodiment, the storage unit 210 may store connection management data. The storage unit 210 may correspond to the memory 120.

In an embodiment, the connection management data may include data identified based on an access packet received by the electronic device from the external electronic device.

In an embodiment, the access packet may include a probe request frame. The probe request frame may include a frame for discovery between IoT devices. The probe request frame may include a frame received from the external electronic device according to a predetermined protocol. The protocol may include, e.g., the Institute of Electrical and Electronic Engineers (IEEE) standard.

In an embodiment, the access packet may include a signal transmitted in advance in case that the external electronic device requests connection to the electronic device.

In an embodiment, the electronic device may update the connection management data in response to receiving the access packet. In case that an access packet is received in a time interval corresponding to the present, a value for the current time interval may be determined as 1. In case that an access packet is not received in a time interval corresponding to the present, a value for the current time interval may be determined as 0.

In an embodiment, the connection management data may be identified based on values determined for a plurality of time intervals. The number of the plurality of time intervals may correspond to the number of bits constituting the connection management data.

In an embodiment, values corresponding to the plurality of time intervals may be determined based on whether an access packet is received from the external electronic device in the plurality of time intervals. For example, among the plurality of time intervals, a time interval in which an access packet is received from the external electronic device may have a value of 1, and a time interval in which an access packet is not received from the external electronic device may have a value of 0.

In an embodiment, the connection management data may be stored in the storage unit 210 for each external electronic device. For example, the storage unit 210 of the electronic device 200 may store connection management data for a first external electronic device, connection management data for a second external electronic device, and connection management data for a third external electronic device, respectively.

In an embodiment, the connection management data may be composed of a predetermined number of bits. For example, the connection management data may be composed of 8 bits. In this case, the connection management data may be identified based on values for 8 time intervals starting from a time interval before a time interval including the present.

Referring to FIG. 3, in a time interval 302 corresponding to the present, the electronic device 200 has received an access packet from a third external electronic device, and has not yet received an access packet from a first external electronic device and a second external electronic device.

In an embodiment, the storage unit 210 may include more storage spaces than the predetermined number. For example, referring to FIG. 3, the connection management data may have a length of 8 bits, but the number of storage areas included in the storage unit 210 may include n areas, which is more than 8.

In an embodiment, each of the plurality of time intervals may correspond to the predetermined number of bits.

In an embodiment, the connection management data may have a binary form. For example, the connection management data may include data composed of 8 bits.

In an embodiment, the electronic device may transmit a probe response frame in response to receiving a probe request frame from the external electronic device.

In an embodiment, the storage unit 210 may have a form of a data buffer. For example, the storage unit 210 may include a predetermined number of storage areas. Values may be sequentially determined in the predetermined number of storage areas. In case that all of the predetermined number of storage areas are filled, a new value may be overwritten in the first filled storage area.

In an embodiment, the storage unit 210 may store an access packet and information regarding a time in case that the access packet is received. Based on the access packet and the information regarding the time in case that the access packet is received, the electronic device may identify the connection management data.

In an embodiment, the communication unit 230 may receive an access packet from external electronic devices.

In an embodiment, the communication unit 230 may transmit a probe response frame to the external electronic device.

In an embodiment, the communication unit 230 may transmit/receive data for connection to external electronic devices.

Referring to FIG. 3, the electronic device 200 may receive an access packet from a third external electronic device in a time interval 302 including the current time. The electronic device 200 may receive an access packet from a first external electronic device in a time interval 304, which is a time interval before the time interval 302. The electronic device 200 may receive an access packet from a third external electronic device in a time interval 306, which is a time interval before the time interval 304. The electronic device 200 may receive an access packet from a first external electronic device and a third external electronic device in a time interval 308, which is a time interval before the time interval 306. The electronic device 200 may receive an access packet from a second external electronic device and a third external electronic device in a time interval 310, which is a time interval before the time interval 308. The electronic device 200 may receive an access packet from a first external electronic device in a time interval 312, which is a time interval before the time interval 310. The electronic device 200 may receive an access packet from a second external electronic device in a time interval 314, which is a time interval before the time interval 312. The electronic device 200 may receive an access packet from a first external electronic device in a time interval 316, which is a time interval before the time interval 314. The electronic device 200 may receive an access packet from a second external electronic device in a time interval 318, which is a time interval before the time interval 316. The electronic device 200 may receive an access packet from a first external electronic device in a time interval 320, which is a time interval before the time interval 318. Further, the electronic device 200 may not receive an access packet from any external electronic device in a time interval 322, which is a time interval n intervals before the current time interval. As illustrated in FIG. 3, the storage unit 210 of the electronic device 200 may store an access packet received for each external electronic device for each time interval, and may identify the connection management data based thereon.

In an embodiment, the detection unit 220 may identify the connection management data. The detection unit 220 of the electronic device 200 may identify the connection management data. In the following description, the connection management data is described as having a length of 8 bits as an example, but the embodiments of the disclosure may be equally applied to connection management data having a length other than 8 bits.

In an embodiment, the electronic device may identify the connection management data of a first external electronic device as "10101010". The electronic device 200 may determine a value for a time interval in which an access packet is received from the first external electronic device as 1, and determine a value for a time interval in which an access packet is not received as 0. Accordingly, among the 8 time intervals from the current time interval 302, a value for a time interval in which an access packet is received, i.e., the time intervals 304, 308, 312, and 316, may be determined as 1, and a value for a time interval in which an access packet is not received, i.e., the time intervals 306, 310, 314, and 318, may be determined as 0. Accordingly, "10101010", which is a value obtained by disposing values for the plurality of time intervals in order of time intervals, may be identified as the connection management data. In this example, disposing values in order of time intervals is described as an example, but this is only an example, and values may also be disposed in reverse order of time.

In an embodiment, the electronic device 200 may identify a value of the connection management data of a second external electronic device as "00010101". The electronic device 200 may determine a value for a time interval in which an access packet is received, i.e., the time intervals 310, 314, and 318, as 1, and determine a value for a time interval in which an access packet is not received, i.e., the time intervals 304, 306, 308, 312, and 316, as 0, among the 8 time intervals from the current time interval 302. Accordingly, "00010101", which is a value obtained by disposing values for the plurality of time intervals in order of time intervals, may be identified as the connection management data.

In an embodiment, the electronic device 200 may identify a value of the connection management data of a third external electronic device as "01110000". The electronic device 200 may determine a value for a time interval in which an access packet is received, i.e., the time intervals 306, 308, and 310, as 1, and determine a value for a time interval in which an access packet is not received, i.e., the time intervals 304, 312, 314, 316, and 318, as 0, among the 8 time intervals from the current time interval 302. Accordingly, "01110000", which is a value obtained by disposing values for the plurality of time intervals in order of time intervals, may be identified as the connection management data.

In an embodiment, the detection unit 220 may determine whether the connection management data includes a predetermined value. For example, in case that the predetermined value is "10101010", it may be determined that the connection management data of the first external electronic device includes the predetermined value, but the second external electronic device and the third external electronic device do not include the predetermined value.

In an embodiment, according to the predetermined value, the electronic device 200 may differently perform an operation for connection to the external electronic device. For example, in case that the connection management data has a first value, the electronic device 200 may increase a connection priority of the corresponding external electronic device. For example, in case that the connection management data has a second value, the electronic device 200 may increase a connection priority of the corresponding external electronic device and display a user interface for performing connection to the corresponding external electronic device. For example, in case that the connection management data has a third value, the electronic device 200 may increase a connection priority of the corresponding external electronic device and transmit a signal for connection to the corresponding external electronic device to the corresponding external electronic device. The first value, the second value, and the third value may be values predetermined according to a user setting or other conditions. The first value, the second value, and the third value may be values shared in advance between the electronic device 200 and external electronic devices.

In an embodiment, the detection unit 220 may convert the connection management data composed of binary to hexadecimal. For example, the connection management data for a first external electronic device is "10101010", and this may be converted to hexadecimal to generate a value such as "AA". For example, the connection management data "00010101" for a second external electronic device may be converted to "15". For example, the connection management data "01110000" for a third external electronic device may be converted to "70".

In an embodiment, the detection unit 220 may convert the connection management data to hexadecimal and then determine whether the converted value has a predetermined value. For example, in case that "AA" is a predetermined value for device connection, a process for device connection may be initiated for a first external electronic device.

In an embodiment, in case that the detection unit 220 determines that the connection management data has a predetermined value, an event for device connection may be performed. The event for device connection may include an increase in a connection priority of the corresponding external electronic device, display of a user interface for connection of the corresponding external electronic device, and initiation of signaling for connection of the corresponding external electronic device.

In an embodiment, the display unit 240 may display information indicating that an event for device connection of the external electronic device occurs.

In an embodiment, the display unit 240 may include a user interface including a list of connectable devices. The list of connectable devices may be displayed according to a priority of each device.

In an embodiment, in case of identifying a user input for connection to the corresponding external electronic device through the user interface, the electronic device 200 may initiate signaling for connection to the corresponding external electronic device.

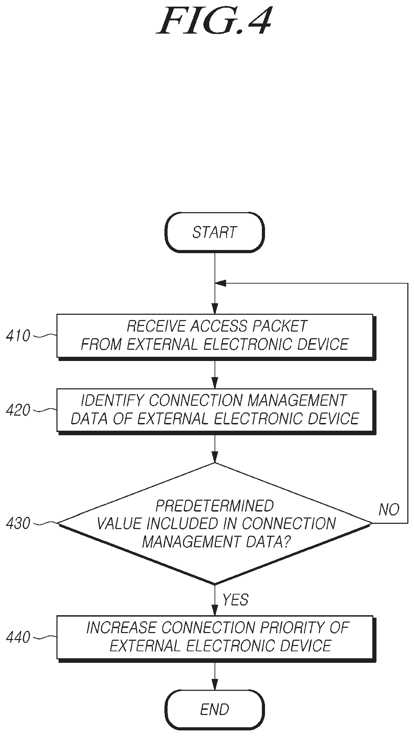

FIG. 4 illustrates an operation flow of an electronic device according to an embodiment. The electronic device of FIG. 4 may include a device corresponding to the electronic device 100 of FIG. 1 and the electronic device 200 of FIG. 2. The external electronic device of FIG. 4 may include a device corresponding to the external electronic device of FIGS. 2 and 3. In the description of FIG. 4, content overlapping the description of FIGS. 2 and 3 may be omitted.

According to an embodiment, in operation 410, the electronic device may receive an access packet from an external electronic device.

In an embodiment, the access packet may include a probe request frame. The probe request frame may include a frame corresponding to a probe request frame defined in IEEE 802.11.

In an embodiment, the access packet may include information regarding a network to which the electronic device and the external electronic device are connected.

In an embodiment, the access packet may include identification information of the external electronic device.

In an embodiment, the access packet may include a signal transmitted from the external electronic device in a unicast, multicast, or broadcast manner.

In an embodiment, the electronic device may receive a probe request frame using Wi-Fi-Direct technology. Wi-Fi-Direct may include technology for performing connection between devices without going through a wireless access point (AP).

In an embodiment, the electronic device may transmit a probe response frame to the external electronic device in response to receiving a probe request frame from the external electronic device.

In an embodiment, the electronic device may store the received access packet in response to receiving an access packet from the external electronic device. The electronic device may store the access packet in a storage area corresponding to a time interval corresponding to a current time in case that the access packet is received. For example, the access packet from the external electronic device may be stored in the storage area 302 of FIG. 3.

In an embodiment, the electronic device may store the received access packet and information regarding a transmission subject of the access packet and a reception time of the access packet in response to receiving an access packet from the external electronic device.

According to an embodiment, in operation 420, the electronic device may identify connection management data of the external electronic device. The connection management data may include data corresponding to the connection management data of FIGS. 2 and 3.

In an embodiment, the connection management data may include data identified based on an access packet received by the electronic device from the external electronic device.

In an embodiment, the access packet may include a probe request frame. The probe request frame may include a frame for discovery between IoT devices. The probe request frame may include a frame received from the external electronic device according to a predetermined protocol. The protocol may include, e.g., the Institute of Electrical and Electronic Engineers (IEEE) standard.

In an embodiment, the access packet may include a signal transmitted in advance in case that the external electronic device requests connection to the electronic device.

In an embodiment, the electronic device may update the connection management data in response to receiving the access packet. In case that an access packet is received in a time interval corresponding to the present, a value for the current time interval may be determined as 1. In case that an access packet is not received in a time interval corresponding to the present, a value for the current time interval may be determined as 0.

In an embodiment, the connection management data may be identified based on values determined for a plurality of time intervals. The number of the plurality of time intervals may correspond to the number of bits constituting the connection management data.

In an embodiment, values corresponding to the plurality of time intervals may be determined based on whether an access packet is received from the external electronic device in the plurality of time intervals. For example, among the plurality of time intervals, a time interval in which an access packet is received from the external electronic device may have a value of 1, and a time interval in which an access packet is not received from the external electronic device may have a value of 0.

In an embodiment, the connection management data may be stored for each external electronic device. For example, the electronic device may store connection management data for a first external electronic device, connection management data for a second external electronic device, and connection management data for a third external electronic device, respectively.

In an embodiment, the connection management data may be composed of a predetermined number of bits. For example, the connection management data may be composed of 8 bits. In this case, the connection management data may be identified based on values for 8 time intervals starting from a time interval before a time interval including the present.

In an embodiment, the electronic device may include more storage spaces than the predetermined number. For example, referring to FIG. 3, the connection management data may have a length of 8 bits, but the number of storage areas included in the electronic device may include n areas, which is more than 8.

In an embodiment, each of the plurality of time intervals may correspond to the predetermined number of bits.

In an embodiment, the connection management data may have a binary form. For example, the connection management data may include data composed of 8 bits.

In an embodiment, the electronic device may identify the connection management data in response to receiving an access packet from the external electronic device.

In an embodiment, the electronic device may identify the connection management data at predetermined intervals.

In an embodiment, the electronic device may identify the connection management data at each time in case that one time interval (e.g., the time intervals of FIG. 3) ends.

In an embodiment, the connection management data may be stored in a memory or a storage unit of the electronic device.

According to an embodiment, in operation 430, the electronic device may determine whether a predetermined value is included in the connection management data. The electronic device may determine whether a predetermined value is included in the connection management data of the external electronic device.

In an embodiment, according to the predetermined value, the electronic device may differently perform an operation for connection to the external electronic device. For example, in case that the connection management data has a first value, the electronic device may increase a connection priority of the corresponding external electronic device. For example, in case that the connection management data has a second value, the electronic device may increase a connection priority of the corresponding external electronic device and display a user interface for performing connection to the corresponding external electronic device. For example, in case that the connection management data has a third value, the electronic device may increase a connection priority of the corresponding external electronic device and transmit a signal for connection to the corresponding external electronic device to the corresponding external electronic device. The first value, the second value, and the third value may be values predetermined according to a user setting or other conditions. The first value, the second value, and the third value may be values shared in advance between the electronic device and external electronic devices.

In an embodiment, the electronic device may convert the connection management data in binary form to hexadecimal and then determine whether the converted data includes a predetermined value.

In an embodiment, the electronic device may generate pattern information of the external electronic device based on the connection management data. The electronic device may determine whether the pattern information includes the predetermined value. An operation in which the electronic device generates pattern information of the external electronic device based on the connection management data may include an operation of converting the connection management data in binary form to data in hexadecimal form.

According to an embodiment, in operation 440, in case of determining that a predetermined value is included in the connection management data, the electronic device may increase a connection priority of the external electronic device.

In an embodiment, the external electronic device may have a connection priority value. The electronic device may increase a connection priority value of the corresponding external electronic device by a predetermined value in order to increase a connection priority of the external electronic device.

In an embodiment, in case of determining that a predetermined value is included in the connection management data, the electronic device may display a user interface for connection of the external electronic device. The user interface for connection of the external electronic device may include a list of a plurality of external electronic devices connectable to the electronic device. The plurality of external electronic devices connectable to the electronic device may be displayed according to each priority. In case of identifying a user input selecting any one external electronic device among the plurality of external electronic devices through the user interface, the electronic device may initiate a sequence for connection to the selected external electronic device. In other words, the electronic device may transmit a connection request (e.g., a Bluetooth pairing request) to the selected external electronic device. The user interface may include information indicating that an event for device connection occurs.

In an embodiment, in case of determining that a predetermined value is included in the connection management data, the electronic device may immediately initiate a sequence for connection of the external electronic device. For example, in case that a priority value of the corresponding external electronic device is equal to or greater than a threshold, the corresponding external electronic device may immediately perform signaling for connection without separately identifying a user input through the user interface.

In an embodiment, the electronic device may transmit a connection request to the external electronic device in response to identifying that a priority of the external electronic device is equal to or greater than a threshold.

In an embodiment, the electronic device may transmit a connection request to the external electronic device in case of identifying that a network to which the external electronic device whose connection priority is increased and the electronic device are connected is identical.

In an embodiment, the electronic device may display a user interface for connection between the external electronic device and the electronic device in case that a connection priority of the external electronic device is equal to or greater than a threshold.

In an embodiment, the electronic device may delete the connection management data from the memory in case that a predetermined time elapses after the access packet is received. In order to periodically update the connection management data to manage a connection priority of the external electronic device, the electronic device may delete all or some of the connection management data at predetermined intervals.

In an embodiment, the access packet may include a clock value of the external electronic device. The electronic device may identify a clock value of the external electronic device through the access packet and perform synchronization for data communication with the external electronic device based on the clock value of the external electronic device.

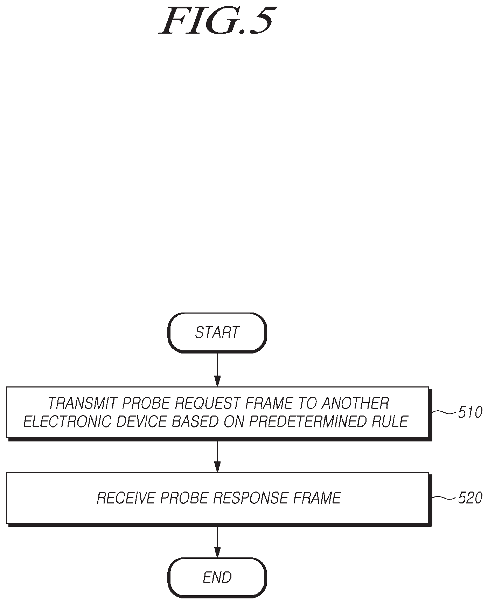

FIG. 5 illustrates an operation flow of an external electronic device according to an embodiment. The external electronic device of FIG. 5 may include a device corresponding to the external electronic device of FIGS. 2 to 4. The electronic device of FIG. 5 may include a device corresponding to the electronic device 100 of FIG. 1, the electronic device 200 of FIG. 2, and the electronic device of FIGS. 3 and 4. In the description of FIG. 5, content overlapping the content described in connection with FIGS. 1 to 5 may be omitted.

According to an embodiment, in operation 510, the external electronic device may transmit a probe request frame to another electronic device based on a predetermined rule.

In an embodiment, the external electronic device may identify that power of the external electronic device is turned on. Thereafter, the external electronic device may identify a request (e.g., a user input, etc.) for connection to another device. The external electronic device may determine whether a device of the same IoT platform is present. In case that the external electronic device determines that a device using the same IoT platform is present, the external electronic device may transmit an access packet (e.g., a probe request frame) to the corresponding device (in this case, the electronic device) according to a predetermined rule. In case that the external electronic device determines that a device using the same IoT platform is not present, the external electronic device may transmit a connection request to the electronic device. An IoT platform is a technology supporting development and operation of various services by connecting IoT devices, sensors, and user devices, and IoT devices using the same IoT platform may be present for each manufacturer of electronic products. The following description is given as an example of a case where the electronic device and the external electronic device use the same IoT platform, but the embodiments of the disclosure may be equally applied in case that information regarding the connection management data is shared in advance between the electronic device and the external electronic device.

In an embodiment, the external electronic device may transmit a probe request in a manner corresponding to a manner in which the external electronic device transmits an access packet to the electronic device in FIGS. 2 to 4.

In an embodiment, the external electronic device may transmit a probe request in a unicast, multicast, or broadcast manner.

In an embodiment, the external electronic device may transmit an access packet in a predetermined time interval so that the electronic device receiving the access packet may identify a predetermined value.

According to an embodiment, in operation 520, the external electronic device may receive a probe response frame. The probe response frame may include a signal transmitted by the electronic device to the external electronic device in response to receiving a probe request frame.

In an embodiment, the external electronic device may receive a connection request signal from the electronic device.

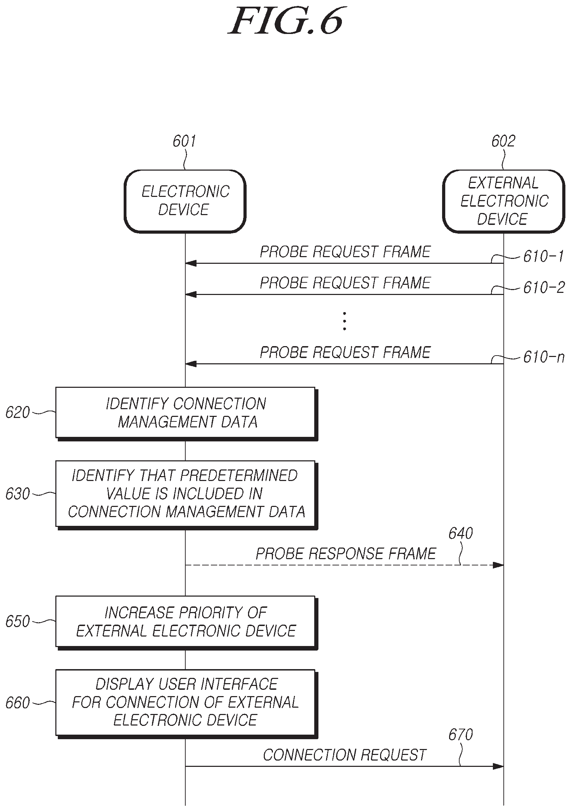

FIG. 6 illustrates a signaling flow of an electronic device 601 and an external electronic device 602 according to an embodiment. The electronic device 601 of FIG. 6 may include a device corresponding to the electronic device 100 of FIG. 1, the electronic device 200 of FIG. 2, and the electronic device of FIGS. 3 to 5. The external electronic device 602 of FIG. 6 may include a device corresponding to the external electronic device of FIG. 2 and the external electronic device of FIGS. 3 to 5.

According to an embodiment, in operation 610, the external electronic device 602 may transmit a probe request frame to the electronic device 601. The probe request frame transmitted by the external electronic device 602 to the electronic device 601 may correspond to the access packet transmitted by the external electronic device to the electronic device in FIGS. 2 to 5.

In an embodiment, the external electronic device 602 may transmit a probe request frame a number (n) corresponding to a length of the connection management data. For example, in case that the connection management data is composed of 8 bits, the external electronic device 602 may transmit a probe request frame 8 times.

In an embodiment, the external electronic device 602 may transmit a probe request frame to the electronic device 601 in a time interval corresponding to a predetermined value. For example, referring to FIG. 3, in case that the predetermined value is "10101010", the external electronic device 602 may transmit an access packet in the time intervals 304, 308, 312, and 316, and may not transmit an access packet in the time intervals 306, 310, 314, and 318. Accordingly, the electronic device 601 may identify that the external electronic device 602 is an external electronic device in which a connection event occurs.

According to an embodiment, in operation 620, the electronic device 601 may identify connection management data. Operation 620 may include all operation content according to operation 420 of FIG. 4.

In an embodiment, the connection management data may include data identified based on an access packet received by the electronic device from the external electronic device.

In an embodiment, the access packet may include a probe request frame. The probe request frame may include a frame for discovery between IoT devices. The probe request frame may include a frame received from the external electronic device according to a predetermined protocol. The protocol may include, e.g., the Institute of Electrical and Electronic Engineers (IEEE) standard.

In an embodiment, the access packet may include a signal transmitted in advance in case that the external electronic device requests connection to the electronic device.

In an embodiment, the electronic device may update the connection management data in response to receiving the access packet. In case that an access packet is received in a time interval corresponding to the present, a value for the current time interval may be determined as 1. In case that an access packet is not received in a time interval corresponding to the present, a value for the current time interval may be determined as 0.

In an embodiment, the connection management data may be identified based on values determined for a plurality of time intervals. The number of the plurality of time intervals may correspond to the number of bits constituting the connection management data.

In an embodiment, values corresponding to the plurality of time intervals may be determined based on whether an access packet is received from the external electronic device in the plurality of time intervals. For example, among the plurality of time intervals, a time interval in which an access packet is received from the external electronic device may have a value of 1, and a time interval in which an access packet is not received from the external electronic device may have a value of 0.

In an embodiment, the connection management data may be stored for each external electronic device. For example, the electronic device may store connection management data for a first external electronic device, connection management data for a second external electronic device, and connection management data for a third external electronic device, respectively.

In an embodiment, the connection management data may be composed of a predetermined number of bits. For example, the connection management data may be composed of 8 bits. In this case, the connection management data may be identified based on values for 8 time intervals starting from a time interval before a time interval including the present.

In an embodiment, the electronic device may include more storage spaces than the predetermined number. For example, referring to FIG. 3, the connection management data may have a length of 8 bits, but the number of storage areas included in the electronic device may include n areas, which is more than 8.

In an embodiment, each of the plurality of time intervals may correspond to the predetermined number of bits.

In an embodiment, the connection management data may have a binary form. For example, the connection management data may include data composed of 8 bits.

In an embodiment, the electronic device may identify the connection management data in response to receiving an access packet from the external electronic device.

In an embodiment, the electronic device may identify the connection management data at predetermined intervals.

In an embodiment, the electronic device may identify the connection management data at each time in case that one time interval (e.g., the time intervals of FIG. 3) ends.

In an embodiment, the connection management data may be stored in a memory or a storage unit of the electronic device.

According to an embodiment, in operation 630, the electronic device 601 may identify that a predetermined value is included in the connection management data. Operation content according to operation 630 may include all operation content according to operation 430 of FIG. 4.

In an embodiment, according to the predetermined value, the electronic device may differently perform an operation for connection to the external electronic device. For example, in case that the connection management data has a first value, the electronic device may increase a connection priority of the corresponding external electronic device. For example, in case that the connection management data has a second value, the electronic device may increase a connection priority of the corresponding external electronic device and display a user interface for performing connection to the corresponding external electronic device. For example, in case that the connection management data has a third value, the electronic device may increase a connection priority of the corresponding external electronic device and transmit a signal for connection to the corresponding external electronic device to the corresponding external electronic device. The first value, the second value, and the third value may be values predetermined according to a user setting or other conditions. The first value, the second value, and the third value may be values shared in advance between the electronic device and external electronic devices.

In an embodiment, the electronic device may convert the connection management data in binary form to hexadecimal and then determine whether the converted data includes a predetermined value.

In an embodiment, the electronic device may generate pattern information of the external electronic device based on the connection management data. The electronic device may determine whether the pattern information includes the predetermined value. An operation in which the electronic device generates pattern information of the external electronic device based on the connection management data may include an operation of converting the connection management data in binary form to data in hexadecimal form.

According to an embodiment, in operation 640, the electronic device 601 may transmit a probe response frame to the external electronic device 602. The probe response frame may include a signal transmitted by the electronic device 601 to the external electronic device 602 in response to the probe request frame.

According to an embodiment, in operation 650, the electronic device 601 may increase a priority of the external electronic device 602. Operation 650 may include all operation content according to operation 440 of FIG. 4.

In an embodiment, the external electronic device may have a connection priority value. The electronic device may increase a connection priority value of the corresponding external electronic device by a predetermined value in order to increase a connection priority of the external electronic device.

According to an embodiment, in operation 660, the electronic device 601 may display a user interface for connection of the external electronic device 602.

According to an embodiment, in operation 670, the electronic device 601 may transmit a connection request to the external electronic device 602.

In an embodiment, in case of determining that a predetermined value is included in the connection management data, the electronic device may display a user interface for connection of the external electronic device. The user interface for connection of the external electronic device may include a list of a plurality of external electronic devices connectable to the electronic device. The plurality of external electronic devices connectable to the electronic device may be displayed according to each priority. In case of identifying a user input selecting any one external electronic device among the plurality of external electronic devices through the user interface, the electronic device may initiate a sequence for connection to the selected external electronic device. In other words, the electronic device may transmit a connection request (e.g., a Bluetooth pairing request) to the selected external electronic device. The user interface may include information indicating that an event for device connection occurs.

In an embodiment, in case of determining that a predetermined value is included in the connection management data, the electronic device may immediately initiate a sequence for connection of the external electronic device. For example, in case that a priority value of the corresponding external electronic device is equal to or greater than a threshold, the corresponding external electronic device may immediately perform signaling for connection without separately identifying a user input through the user interface.

In an embodiment, the electronic device may transmit a connection request to the external electronic device in response to identifying that a priority of the external electronic device is equal to or greater than a threshold.

In an embodiment, the electronic device may transmit a connection request to the external electronic device in case of identifying that a network to which the external electronic device whose connection priority is increased and the electronic device are connected is identical.

In an embodiment, the electronic device may display a user interface for connection between the external electronic device and the electronic device in case that a connection priority of the external electronic device is equal to or greater than a threshold.

In an embodiment, the electronic device may delete the connection management data from the memory in case that a predetermined time elapses after the access packet is received. In order to periodically update the connection management data to manage a connection priority of the external electronic device, the electronic device may delete all or some of the connection management data at predetermined intervals.

In an embodiment, the access packet may include a clock value of the external electronic device. The electronic device may identify a clock value of the external electronic device through the access packet and perform synchronization for data communication with the external electronic device based on the clock value of the external electronic device.

An electronic device according to an embodiment of the disclosure includes a memory, a communication unit, and a processor connected to the memory and the communication unit, and the processor is configured to receive an access packet from an external electronic device through the communication unit, identify connection management data of the external electronic device, and increase a connection priority of the external electronic device in response to identifying that connection management data of a first external electronic device includes a predetermined value, the connection management data of the external electronic device is composed of a predetermined number of bits, and bits of the connection management data may be determined based on whether the access packet is received from the external electronic device in a plurality of time intervals.

In an embodiment, the access packet may include a probe request frame, and the probe request frame may include an identifier of a network to which the external electronic device is connected.

In an embodiment, values corresponding to the plurality of time intervals may have a value of 0 or 1, a time interval in which an access packet is received from the external electronic device may have a value of 1, and a time interval in which an access packet is not received from the external electronic device may have a value of 0.

In an embodiment, the processor may increase a connection priority of the external electronic device in case that the connection management data includes a first value, and transmit a connection request to the external electronic device in case that the connection management data includes a second value.

In an embodiment, the processor may transmit a connection request to the external electronic device in response to identifying that a priority of the external electronic device is equal to or greater than a threshold.

In an embodiment, the processor may transmit a connection request to the external electronic device in response to identifying that a network to which the external electronic device and the electronic device are connected is identical.

In an embodiment, the processor may display a user interface for connection between the external electronic device and the electronic device in case that a connection priority of the external electronic device is equal to or greater than a threshold.

In an embodiment, the electronic device is configured to generate pattern information of the external electronic device based on the connection management data and determine whether the pattern information includes the predetermined value, the connection management data may have a binary form, and the pattern information may have a hexadecimal form.

In an embodiment, the processor may delete the connection management data from the memory in case that a predetermined time elapses after the access packet is received.

In an embodiment, the processor may synchronize a clock value of the electronic device for communication between the electronic device and the external electronic device based on a clock value of the external electronic device, the probe request frame including the clock value of the external electronic device.

A method of operating an electronic device according to an embodiment of the disclosure includes receiving an access packet from an external electronic device, identifying connection management data of the external electronic device, and increasing a connection priority of the external electronic device in response to identifying that probe storage data of a first external electronic device includes a predetermined value, data regarding a connection pattern of the external electronic device includes a predetermined number of bits, and bits of the connection management data may be determined based on whether the access packet is received from the external electronic device in a plurality of time intervals.

In an embodiment, the access packet may include a probe request frame, and the probe request frame may include an identifier of a network to which the external electronic device is connected.

In an embodiment, values corresponding to the plurality of time intervals may have a value of 0 or 1, a time interval in which an access packet is received from the external electronic device may have a value of 1, and a time interval in which an access packet is not received from the external electronic device may have a value of 0.

In an embodiment, the method of operating the electronic device may include increasing a connection priority of the external electronic device in case that the connection management data includes a first value, and transmitting a connection request to the external electronic device in case that the connection management data includes a second value.

In an embodiment, the method of operating the electronic device may include transmitting a connection request to the external electronic device in response to identifying that a priority of the external electronic device is equal to or greater than a threshold.

In an embodiment, the method of operating the electronic device may include transmitting a probe response frame to the external electronic device in response to identifying that a network to which the external electronic device and the electronic device are connected is identical.

In an embodiment, the method of operating the electronic device may include displaying a user interface for connection between the external electronic device and the electronic device in case that a connection priority of the external electronic device is equal to or greater than a threshold.

A method of operating an electronic device according to an embodiment includes generating pattern information of the external electronic device based on the connection management data and determining whether the pattern information includes the predetermined value, and the connection management data may have a binary form, and the pattern information may have a hexadecimal form.

In an embodiment, the method of operating the electronic device may include deleting the connection management data from the memory in case that a predetermined time elapses after the access packet is received.

In an embodiment, the probe request frame may synchronize a clock value of the electronic device for communication between the electronic device and the external electronic device based on a clock value of the external electronic device.

The electronic device according to various embodiments of the disclosure may be one of various types of electronic devices. The electronic devices may include, for example, a display device, a portable communication device (e.g., a smartphone), a computer device, a portable multimedia device, a portable medical device, a camera, a wearable device, or a home appliance. The electronic device according to an embodiment of the disclosure is not limited to the above-described devices.

It should be appreciated that various embodiments of the present disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the electronic device 200 described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a memory including at least one storage medium storing instructions;
a communication unit including a communication circuitry; and
a processor connected to the memory and the communication unit and including a processing circuitry, wherein the processor is configured to:
receive an access packet from an external electronic device through the communication unit;
identify a connection management data of the external electronic device; and
increase a connection priority of the external electronic device in response to identifying that the connection management data of the external electronic device includes a predetermined value, wherein the connection management data of the external electronic device is composed of a predetermined number of bits, and wherein bits of the connection management data are determined based on whether the access packet is received from the external electronic device in a plurality of time intervals.

2. The electronic device of claim 1, wherein the access packet includes a probe request frame, and the probe request frame includes an identifier of a network to which the external electronic device is connected.

3. The electronic device of claim 1, wherein values corresponding to the plurality of time intervals have a value of 0 or 1, a time interval in which an access packet is received from the external electronic device has a value of 1, and a time interval in which an access packet is not received from the external electronic device has a value of 0.

4. The electronic device of claim 1, wherein the processor is configured to:
increase a connection priority of the external electronic device in case that the connection management data includes a first value; and
transmit a connection request to the external electronic device in case that the connection management data includes a second value.

5. The electronic device of claim 1, wherein the processor is configured to transmit a connection request to the external electronic device in response to identifying that a priority of the external electronic device is equal to or greater than a threshold.

6. The electronic device of claim 2, wherein the processor is configured to transmit a connection request to the external electronic device in response to identifying that a network to which the external electronic device and the electronic device are connected is identical.

7. The electronic device of claim 1, wherein the processor is configured to: display a user interface for connection between the external electronic device and the electronic device in case that a connection priority of the external electronic device is equal to or greater than a threshold.

8. The electronic device of claim 7, wherein the processor is configured to:
generate pattern information of the external electronic device based on the connection management data; and
determine whether the pattern information includes the predetermined value, and wherein the connection management data has a binary form, and wherein the pattern information has a hexadecimal form.

9. The electronic device of claim 1, wherein the processor is configured to delete the connection management data from the memory in case that a predetermined time elapses after the access packet is received.

10. The electronic device of claim 2, wherein the probe request frame includes a clock value of the external electronic device, and
wherein the processor is configured to:
synchronize the clock value of the electronic device for communication between the electronic device and the external electronic device based on the clock value of the external electronic device.

11. A method of operating an electronic device, the method comprising:
receiving an access packet from an external electronic device;
identifying connection management data of the external electronic device; and
increasing a connection priority of the external electronic device in response to identifying that probe storage data of the external electronic device includes a predetermined value, wherein data regarding a connection pattern of the external electronic device includes a predetermined number of bits, and wherein bits of the connection management data are determined based on whether the access packet is received from the external electronic device in a plurality of time intervals.

12. The method of claim 11, wherein the access packet includes a probe request frame, and the probe request frame includes an identifier of a network to which the external electronic device is connected.

13. The method of claim 11, wherein values corresponding to the plurality of time intervals have a value of 0 or 1, a time interval in which an access packet is received from the external electronic device has a value of 1, and a time interval in which an access packet is not received from the external electronic device has a value of 0.

14. The method of claim 11, further comprising:
increasing a connection priority of the external electronic device in case that the connection management data includes a first value; and
transmitting a connection request to the external electronic device in case that the connection management data includes a second value.

15. The method of claim 11, further comprising transmitting a connection request to the external electronic device in response to identifying that a priority of the external electronic device is equal to or greater than a threshold.
